# EUROPÄISCHE PATENTSCHRIFT

(11) **EP 3 939 915 B1**
(45) Veröffentlichungstag und Bekanntmachung des Hinweises auf die Patenterteilung: **21.02.2024**
(21) Anmeldenummer: 21185739.6
(22) Anmeldetag: 15.07.2021
(51) Int. Cl.: B65G 53/66, B65G 47/19, B65G 47/20, G01G 13/24, B65G 65/44

(54) **SCHWINGFÖRDER-VORRICHTUNG UND VERFAHREN ZUR SCHWINGFÖRDERUNG VON SCHÜTTGUT**
VIBRATION CONVEYOR DEVICE AND METHOD FOR VIBRATION CONVEYANCE OF BULK GOODS
DISPOSITIF FORMANT TRANSPORTEUR OSCILLANT ET PROCÉDÉ DE TRANSPORT OSCILLANT DES PRODUITS EN VRAC

(30) Priorität: 15.07.2020 DE 102020118707
(43) Veröffentlichungstag der Anmeldung: 19.01.2022
(73) Patentinhaber: CiTEX Holding GmbH, 49324 Melle (DE)
(72) Erfinder: Böhm, Roland, 48341 Altenberge (DE)
(74) Vertreter: Bremer, Ulrich

(56) Entgegenhaltungen:
- CA-A1- 2 749 623
- DE-C1- 3 813 109
- US-A- 5 074 435
- US-A1- 2006 032 729

## Beschreibung

Die Erfindung betrifft eine Schwingförder-Vorrichtung und ein Verfahren zum Schwingfördern von Schüttgut.

Die Schwingfördertechnik dient zur Förderung von rieselfähigen Gütern bzw. Schüttgütern. Hierzu wird Schüttgut aus einem Fülltrichter, d.h. einem zu befüllenden Vorratsbehälter, einer Förderrinne zugeführt und die Förderrinne durch einen Schwingtreiber in Schwingungen bzw. Vibrationen versetzt, durch die das Schüttgut entlang der Förderrinne zu ihrem Ende, das die Materialausgabe darstellt, befördert wird. Der Schwingtreiber versetzt die Förderrinne in Schwingungen mit definiert eingestellter Schwingfrequenz und Schwingweite bzw. Wurfweite, durch die das Schüttgut somit stoßweise entlang der Förderrinne befördert wird. Der Fülltrichter weist im Allgemeinen an seinem unteren Ende einen Trichterauslass auf, aus dem das rieselfähige Schüttgut auf die Förderrinne fällt und zunächst im Wesentlichen in dem Füllbereich zwischen dem Trichterauslass und der Förderrinne verbleibt, ohne sich allzu sehr zur Seite hin zu verteilen. Durch die Schwingungen des Schwingförderers wird es nachfolgend in Mikroschritten in Förderrichtung geworfen, wobei das im Fülltrichter aufgenommene Vorratsmaterial selbstständig aus dem Trichterauslass auf die Förderrinne nachrutscht, wodurch sich der Fülltrichter leert.

Durch die Schwingfördertechnik soll insbesondere ein festgelegter Materialdurchsatz, d. h. Masse pro Zeit, erreicht werden, um das Schüttgut kontinuierlich z. B. einem Verarbeitungsprozess zuzuführen.

Die Messung des Materialdurchsatzes erfolgt insbesondere im loss in weight-Prinzip. Hierzu kann der Querschnitt der Förderrinne, eine erwartete Schichthöhe sowie die Schwingweite (Wurfweite) und Schwingfrequenz berücksichtigt werden. Aufgrund der materialspezifischen Fördereigenschaften des jeweiligen Schüttgutes ergeben sich jedoch im Allgemeinen Materialdurchsätze, die schwer aus theoretischen Berechnungen zu ermitteln sind. So sind materialspezifische Fördereigenschaften wie Form und Beschaffenheit des Förderguts, Festigkeit, aber auch z. B. Elastizitätsverhalten als Funktion der sich ausbildenden Schichthöhe, z.B. das Dämpfungsverhalten bei der Förderung, weiterhin die Adhäsion, insbesondere eine brückenbildende Adhäsion, Eigenschaften der Kompressibilität oder Inkompressibilität, weiterhin auch die Auswirkungen unterschiedlicher Temperaturen auf diese materialspezifischen Eigenschaften, sowie der Abbau der Schichtdickenhöhe als Funktion der Rinnenlänge relevant. Auch die Oberflächenbeschaffenheit der Förderrinne, ihre Form sowie die Ausführung der Materialausgabe als Abrisskante der Förderrinne sind hierbei relevant. Für eine theoretische Berechnung des Materialdurchsatzes sind weiterhin auch die schwingungstechnischen Randbedingungen, insbesondere die Steifigkeit der Rinne, die Schwingungsentkopplung zum Untergrund und das damit sich einstellende Schwingmodell relevant.

Somit erfolgt im Allgemeinen vor Beginn der Schwingförderung eine grobe Einstellung der Schwingförder-Vorrichtung, indem eine Höhenposition des Fülltrichters mit seinem unteren Trichterauslass über der Förderrinne eingestellt wird und der Schwingtreiber mit Anfangsparametern betrieben wird.

Der sich einstellende Materialdurchsatz wird nachfolgend durch Messung der Gesamtmasse aus Fülltrichter, Förderrinne und weiteren Teilen mitsamt des aufgenommenen Schüttgutes gemessen, da der Fülltrichter im Allgemeinen chargenweise in Füllphasen befüllt wird und nachfolgend entsprechend bei der Förderung die Gesamtmasse abnimmt. Die Gesamtmasse wird mittels einer Waage, z.B. als Kraft oder Druck, gemessen.

Somit werden im Allgemeinen nachfolgend die Parameter eines Schwingtreibers des Schwingförderers, d. h. Schwingfrequenz und Schwingweite, entsprechend geändert, um den Soll-Materialdurchsatz zu erreichen.

Der Schwingtreiber kann in den Parametern Schwingfrequenz und Schwingweite auch durch eine einparametrige Stellgröße, z.B. eine angelegte Spannung, eingestellt werden.

Es zeigt sich hierbei, dass materialabhängig unterschiedliche Materialdurchsätze bzw. Förderströme und ein unterschiedliches Verhalten bei zunächst identischen Förderbedingungen vorliegen. So können eingestellte Höhenpositionen des Fülltrichters und Betriebsparameter des Schwingtreibers, die sich für ein Granulat als geeignet erwiesen haben, z. B. bei Pulvern zu unzureichenden Ergebnissen führen.

In der Praxis wird somit empirisch die Höhe des Fülltrichters eingestellt, und entsprechend ein eingeschränkter Materialstrom hingenommen, oder auch nachfolgend die Höhenposition des Fülltrichters manuell fortlaufend verändert, wobei derartige Einstellungen im Allgemeinen keine Reproduzierbarkeit dieser Parameter ermöglichen.

Die unterschiedliche Schichthöhe bzw. Füllhöhe, d. h. der vertikale Abstand des unteren Trichterauslasses gegenüber der Förderrinne, führt hierbei zu unterschiedlichen Materialdurchsätzen. Eine größere Schichthöhe führt zu größeren Schichtdicken des Schüttgutes in der Förderrinne und somit zu einem höheren Materialdurchsatz.

Die DE 44 05 253 C2 beschreibt ein Verfahren und eine Vorrichtung zum Steuern der Förderleistung von Schwingfördervorrichtungen. Hierbei erfolgt das Steuern des Antriebs zur Einstellung der Förderleistung bei einer Schwingfördervorrichtung mit Gewichtskontrolle mit einem Materialbehälter, einer Schwingfördereinrichtung mit einem Antrieb zum Vibrieren des Materialbehälters, einer Wiegevorrichtung zum Erfassen des Gewichts des geförderten Materials und einer Vorrichtung zum Abschätzen der Förderleistung, wobei die laufende Förderleistung abgeschätzt und eine Stellgröße der Schwingfördereinrichtung zugeführt wird, um die Förderleistung einzustellen, wobei mehrere Schritte vorgesehen sind.

Die DE 41 42 398 A1 beschreibt eine Steuereinrichtung für einen Schwingförderer, der durch eine Magneteinrichtung erregbar ist, mit einem der Magneteinrichtung vorgeschalteten Leistungsteil. Hierbei erzeugt ein Sensor ein der Schwingung des Schwingförderers entsprechendes Signal, das der Steuerschaltung als Istwert zugeführt wird, wobei ein durch eine Vorgabeeinrichtung vorgegebener Sollwert für die Schwingung mit dem Istwert verglichen wird.

Die US 5,074,535 A beschreibt ein System zum Steuern der Zuführrate von einer Vibrations-Zuführung, die eine Vorrichtung zum Messen der von der Zuführeinrichtung ausgegebenen Menge, eine Vorrichtung zum Ändern eines Neigungswinkels der Zuführeinrichtung, und eine Steuereinrichtung aufweist, wobei die Steuereinrichtung mit einer Messeinrichtung und einer Vorrichtung zum Ändern der Steigung verbunden ist, um in Abhängigkeit von Änderungen des Gewichts oder Volumens des ausgegebenen Materials Einstellungen vorzunehmen.

CA 2 749 623 A1 offenbart den Oberbegriff des Anspruchs 14 und beschreibt eine Vorrichtung zum Befüllen von Behältern, in der eine Vibrations-Plattenanordnung vorgesehen ist, die eine Platte zum Transportieren von diskreten Artikeln von einem Aufnahmeende der Platte zu einem Ausgabeende aufweist, wobei die Platte mit einem einstellbaren Gefälle zum Transport der Artikel angeordnet ist. Als diskreter Artikel könnten zum Beispiel Tabletten, Kosmetik-Güter, Haarfärb-Komponenten, Süßigkeiten, Nüsse usw. transportiert werden. Hierbei ist eine Vibrations-Eingabeeinrichtung zum Erzeugen der Vibrationsbewegungen der Platte vorgesehenen, wobei eine Vielzahl von Pfaden zur Aufnahme der diskreten Artikel von dem Ausgabeende vorgesehen ist. Die Einstellung der Steigung kann insbesondre in Abhängigkeit charakteristischer Merkmale der diskreten Artikel erfolgen, zum Beispiel Gewicht, Größe, Volumen, Form.

US 5,074,435 A beschreibt ein System zum Steuern der Zufuhrrate von einer Vibrationszuführung, wobei eine von der Zuführeinrichtung ausgegebene Materialmenge gemessen und ein Gefällewinkel der Zuführeinrichtung geändert wird, insbesondere in Abhängigkeit von dem Gewicht oder Volumen des zugeführten Materials. Die Änderung des Gefälles erfolgt durch Anheben oder Absenken eines Endes der Zuführeinrichtung, insbesondere während des Betriebes.

Aus US 2006/032729 A1 ist eine Dosiervorrichtung für pulverartige Materialien bekannt, die einen Oszillations-Antriebsmechanismus aufweist, um ein pulverartiges Material, aus einem Trichter mit kalibriertem Auslassquerschnitt zu entnehmen und zu dosieren. Hierbei wird eine Massenflussrate aus der Querschnittsöffnung ermittelt.

Die DE 3813109 C1 beschreibt ein Verfahren und eine Vorrichtung zum dosierten Austrag von Glasfasern und dergleichen schwerfließfähigen Feststoffen, wobei ein Vorrat eines Dosiergutes auf ein Dosiergerät ausgegeben wird und durch eine kontinuierlich vorwärts schwingende Kreis- bzw. Spiralbewegung in dauernder Bewegung gehalten wird. Von diesem Dosiergutvorrat wird ein dosierter Teilstrom kontinuierlich entlang einer gekrümmten Linie abgezogen. Das Dosiergerät weist einen durch einen Schwingantrieb in Schwingung versetzbaren, etwa zylinderförmigen ausgebildeten Schwingkopf auf.

Der Erfindung liegt somit die Aufgabe zugrunde, ein Verfahren zur Schwingförderung von Schüttgut und eine Schwingförder-Vorrichtung zu schaffen, die eine sichere und reproduzierbare Einstellung eines Materialdurchsatzes ermöglichen.

Diese Aufgabe wird durch ein Verfahren und eine Schwingförder-Vorrichtung nach den unabhängigen Ansprüchen gelöst. Die Unteransprüche beschreiben bevorzugte Weiterbildungen.

Das erfindungsgemäße Verfahren kann insbesondere mit einer erfindungsgemäßen Schwingförder-Vorrichtung durchgeführt werden. Die erfindungsgemäße Schwingförder-Vorrichtung ist insbesondere vorgesehen, ein erfindungsgemäßes Verfahren durchzuführen.

Erfindungsgemäß ist somit eine automatisierte Einstellung und Regelung der Schwingförder-Vorrichtung vorgesehen, um einen angestrebten Soll-Materialdurchsatz zu erreichen.

Hierzu gibt der Benutzer einen Soll-Materialdurchsatzes ein, z.B. in kg/h, und materialspezifische Parameter des Schüttguts ein wie insbesondere die Materialart und die Körnungsgröße und/oder Kornart, z.B. Pulver, Granulat, Flocken usw., und gegebenenfalls weitere relevante Parameter wie Temperatur, Feuchtigkeitsgrad. Hieraus werden dann vorzugsweise Anfangs-Parameter der einzusetzenden Betriebsparameter ermittelt, eingestellt und die Fördervorrichtung betrieben.

Während des Betriebs wird die Gesamtmasse einer relevanten Anordnung mitsamt aufgenommenem Schüttgut gemessen und hieraus der Materialdurchsatz als zeitliche Änderung bzw. Abnahme fortlaufend ermittelt, woraufhin der aktuelle Materialdurchsatz bewertet wird und eine Regelung bzw. Änderung der Betriebsparameter erfolgt.

Hierbei wird insbesondere erkannt, dass primär die Schichthöhe oder Füllhöhe, d. h. der vertikale Abstand des unteren Trichterauslasses zur Förderrinne, einzustellen ist, und nachfolgend eine Feineinstellung des Materialdurchsatzes bzw. Förderstromes durch eine Änderung der Schwingweite eingestellt wird. Hierzu kann in dem Schritt der Bewertung der ermittelte Materialdurchsatz mit dem Soll-Materialdurchsatz verglichen werden, wodurch eine Differenz ermittelt wird, sodass dann der Betrag der Differenz mit einem Differenz-Grenzwert verglichen wird, damit in Abhängigkeit dieses Vergleichs oder als Feineinstellung die Schwingweite verändert wird.

So kann in dem Fall, dass der Betrag der Differenz den Differenz-Grenzwertes unterschreitet, eine Regelung alleine durch Änderung bzw. Feineinstellung der Schwingweite erfolgen,
hingegen in dem Fall, dass der Betrag der Differenz den Differenz-Grenzwertes überschreitet, die Schichthöhe verändert werden, gegebenenfalls auch unter entsprechender Anpassung der Schwingweite, so dass vorteilhafterweise für die andere Schichthöhe eine andere Kennlinie des gespeicherten Kennlinien-Satzes herangezogen werden kann.

Somit kann eine effektive Regelung ohne unnötiges fortdauerndes "Ausprobieren" verschiedener Parameter, die nachfolgend nicht oder nur schwer reproduzierbar sind, und weiterhin auch der Soll-Materialdurchsatzes schnell erreicht werden.

Erfindungsgemäß wird somit erkannt, dass die einzustellende Schichthöhe den primären Einstellwert darstellt und die Feineinstellung des Materialdurchsatzes dann durch Änderung der Schwingweite erfolgt.

Erfindungsgemäß wird hierbei insbesondere erkannt, dass eine Veränderung der Schwingfrequenz nicht so vorteilhaft ist. Die Schwingfrequenz wird vorteilhafterweise auf einen festen Wert eingestellt, der sich insbesondere an den Schwingeigenschaften des Fördersystems aus Förderrinne mit Schüttgut und elastischer Aufhängung orientieren kann.

Vorteilhafterweise wird eine Schwingfrequenz eingestellt, die ungleich einer Eigenfrequenz des schwingfähigen Systems ist, vorzugsweise nahe an dieser liegt, jedoch von dieser Eigenfrequenz bzw. Resonanzfrequenz abweicht, insbesondere eine feste Schwingfrequenz im Bereich bis zu 20 % unterhalb oder oberhalb der Eigenfrequenz bzw. Resonanzfrequenz.

Hierdurch wird ein effektiver, energiesparender und auch materialschonender Betrieb der Förderrinne mit ihrer elastischen Aufhängung erreicht, ohne durch zu große Schwingungen Beschädigungen zu riskieren.

Die Schwingförder-Vorrichtung kann eine elastische Aufhängung der Förderrinne auf einer Schwingtreiberbasis mit Blattfedern aufweisen, die eine Schwingung in einer kombinierten Richtung aus der Förderrichtung und der vertikalen Richtung zulassen.

Erfindungsgemäß sind vorteilhafterweise Kennlinien für unterschiedliche Materialien, insbesondere abhängig von Material und Korngröße des Schüttgutes, hinterlegt. Somit kann der Benutzer vor dem Prozessbeginn den Soll-Materialdurchsatz und die Materialeigenschaften des Schüttgutes über eine Benutzerschnittstelle eingeben, so dass die Steuereinrichtung entsprechend den eingegebenen Werten gespeicherten Kennlinien heranzieht.

Die Kennlinien können insbesondere aus Kalibrierungsmessungen oder Testmessungen gewonnen werden, insbesondere mittels einzelner Messpunkte, zwischen denen interpoliert werden kann. So kann insbesondere für das betreffende Material eine Kennlinien-Datei mit mehreren Kennlinien für unterschiedliche Schichthöhen und Schwingweiten vorliegen.

Somit ist eine genaue, sehr materialspezifische Einstellung möglich, die direkt eine vorteilhafte Auswahl geeigneter Anfangs-Parameter ermöglicht. Der Speicher mit den Kennlinien bzw. Kennlinien-Daten kann fortlaufen aktualisiert und erweitert werden, so dass eine schnelle und genaue, aktuelle Anpassung möglich ist, auch an Schüttgut, das bisher nicht befördert wurde.

Vorzugsweise wird eine Kennlinie gewählt, bei der der Arbeitspunkt für den Soll-Materialdurchsatz in einem mittleren Bereich liegt, was z.B. als prozentuell mittlerer Bereich der Kennlinie oder als Mindestabstand der Kennlinie von den Grenzen oder Enden der Kennlinie gewählt werden kann.

Somit wird eine Variabilität zu größeren und kleineren Materialdurchsätzen hin ermöglicht, wenn bei der nachfolgenden Regelung Änderungen aufgrund der tatsächlichen Prozessbedingungen eintreten, ohne die Kennlinie zu verlassen.

Die Auswahl eines mittleren Arbeitspunktes kann z. B. dahingehend erfolgen, dass Änderungen des Materialdurchsatzes um mindestens 20 oder 50 % zu kleineren und höheren Werten möglich sind, ohne die als primären Einstellwert eingegebene Schichthöhe zu verändern.

Erfindungsgemäß werden somit einige Vorteile erreicht. So können ideale Schichthöhen reproduzierbar eingestellt und hierzu die weiteren Prozessparameter zur Erzielung gewünschter Soll-Materialdurchsätze abgespeichert werden.

Weiterhin kann erfindungsgemäß eine Förderkonstanz gemessen werden, d. h. die kurzzeitigen Abweichungen des Materialdurchsatzes. So wurde erfindungsgemäß festgestellt, dass
- z. B. eine eingestellte minimale Schichthöhe des Förderstroms in der Förderrinne eine sehr genaue Einstellung des Förderstroms pro Schwingungsweitenänderung und somit eine genaue Einstellung des Materialdurchsatzes zuließ,
- jedoch der bei einer derartigen Einstellung maximal erzielbare Massedurchsatz sehr gering ist.
So konnte für Granulate ermittelt werden, dass bei Einstellung einer angesetzten minimalen Schichthöhe z. B. 0 bis 10 % des Maximalförderbereichs erzielt werden können, dafür jedoch eine sehr hohe Förderkonstanz erreicht wurde. Hingegen kann bei Einstellung einer maximalen Schichthöhe, die z. B. durch die Rinnenhöhe festgelegt wird und somit eine vollständige Befüllung der Förderrinne anstrebt, materialabhängig z. B. 20 bis 30 % durch kleine Einstellwerte der Schwingweite erreicht werden können. Aufgrund der hohen, in sich undefiniert brechenden Schicht, insbesondere auch bei komprimierenden Pulvern, wird an der Abrisskante der Materialausgabe der Förderrinne insbesondere bei geringen Durchsätzen jedoch keine gute Förderkonstanz des Förderstroms erreicht.

Somit wird vorzugsweise als Anfangsparameter eine Mittelstellung eingestellt, z. B. in einem Bereich von 10 bis 60 % eines maximalen Förderstroms, wodurch eine gute Förderkonstanz bei hohem Materialdurchsatz erreicht wird.

Gemäß einer vorteilhaften Ausbildung sind die Kennlinien mit diskreten bzw. vorgegebenen Schichthöhen der Höhenverstellvorrichtung gespeichert, wodurch die Reproduzierbarkeit erhöht wird. Diese Werte können z.B. auch durch mechanische Rasten eingestellt werden, was bei den erheblichen zu verstellenden Massen vorteilhaft ist und die mechanische Stabilität erhöht.

Vorteilhafterweise erfolgt die Höheneinstellungen vollautomatisch durch eine z. B. elektromotorische Höhenverstelleinrichtung. Somit nimmt die Steuereinrichtung zum einen die vom Benutzer eingegebenen Werte und im Betrieb die Gesamtmasse in Abhängigkeit der Zeit zur Ermittlung des Materialdurchsatzes auf, und stellt durch entsprechende Steuersignale die Parameter des Schwingtreibers und der Höhenverstellvorrichtung ein. Somit wird erfindungsgemäß eine hohe Benutzerfreundlichkeit erreicht, indem kann z.B. der Benutzer als Eingabedaten z.B. nur die Materialart, die Körnungsgröße und den Soll- Materialdurchsatzes eingibt, worauf hin die Steuereinrichtung die relevante Kennlinie und hieraus die Anfangs-Parameter ermittelt und nachfolgend die Regelung übernimmt.

Gemäß einer weiteren vorteilhaften Ausbildung kann die Auswahl der Anfangs-Parameter des Schwingförderers, d.h. insbesondere Anfangs- Schwingfrequenz, Anfangs- Schichthöhe und Anfangs-Schwingweite, unter Berücksichtigung relativer Förderabweichungen des Massedurchsatzes erfolgen. Somit sind relative Förderabweichungen des Massedurchsatzes in Abhängigkeit insbesondere des Materials, d.h. materialspezifisch, für die Stellgröße, d.h. insbesondere eine an den Schwingtreiber angelegte analoge Spannung, gespeichert. Vorteilhafterweise kann somit eine geringe relative Förderabweichung gewählt werden, um einen konstanten Materialdurchsatz zu erreichen.

Die Kennlinien können somit vorteilhafterweise zusätzlich auch die relativen Förderabweichungen des Massedurchsatzes in Abhängigkeit der Stellgröße enthalten. Die Kennlinien könne somit mehrdimensional, z.B. dreidimensional gespeichert sein.

Relevante Schüttgüter sind grundsätzlich sämtliche fluidisierbaren, rieselfähigen Materialien, z. B. Pulver, Körner, Granulate, Flocken, Schredderpartikel, Gries oder Regranulate. Die Materialarten können z.B. Ausgangsstoffe für einen nachfolgenden Bearbeitungsprozess bzw. Herstellungsverfahren sein, z.B. Kunststoffe wie Polymere, auch Gummi und andere Materialien für ein nachfolgendes Extrusionsverfahren;
weiterhin können auch Stein bzw. Sand und ähnliche Materialien, aber auch z. B. Lebensmittel wie Mehl und andere Ausgangsprodukte gefördert werden.

Weiterhin kann die Steuereinrichtung die aktuellen Messungen und Einstellungen, d. h. das Verhältnis vom Materiedurchsatz als Funktion der eingestellten Schichthöhe und der Schwingweite bei der Schwingfrequenz f, im Speicher abspeichern, bzw. diese Daten somit dynamisch korrigieren, so dass auch Änderungen der Vorrichtung über längere Betriebszeiträume, z.B. durch Verschleiß oder Veränderung des Schwingungsverhaltens, das zu einer Änderung der Wurfmasse führen kann, berücksichtigt werden. Somit wird das Verfahren fortlaufend aktualisiert und verbessert, ohne dass der Benutzer grundsätzlich dies vorzunehmen hat.

Erfindungsgemäß sind insbesondere eine oder mehrere der folgenden Weiterbildungen vorgesehen:
- Ein Verfahren oder eine Vorrichtung, wobei eine Schwingfrequenz eingestellt wird, die in einem Bereich von 10 bis 20 % unterhalb oder oberhalb einer Resonanzfrequenz des schwingfähigen Systems aus der elastischen Aufhängung und der mit dem Schüttgut beladenen Förderrinne liegt.
- ein Verfahren oder eine Vorrichtung, wobei bei jeder Kennlinie jeweils für eine Materialart und eine Partikelgröße der Materialdurchsatz in Abhängigkeit der Schwingweite und der Schichthöhe, festgelegt ist.
- ein Verfahren oder eine Vorrichtung, wobei die Kennlinien eine relative Förderabweichung in Abhängigkeit einer/der Stellgröße angeben
- ein Verfahren oder eine Vorrichtung, wobei eine Kennlinie mit Anfangs-Parametern für eine geringe oder geringsten Anfangs-Schwingweite gewählt wird, für eine hohe Energie-Effizienz.
- ein Verfahren oder eine Vorrichtung, wobei als Betriebsparameter die Schichthöhe und die Schwingweite bei der Schwingfrequenz, gespeichert werden
   - ein Verfahren oder eine Vorrichtung, wobei ein während der Füllphase erfolgter Masseauswurf durch die Materialausgabe entweder aus dem vorher ermittelten Materialdurchsatz abgeschätzt oder vernachlässigt wird.

Grundsätzlich umfasst die Erfindung weiterhin ein Extrusionsverfahren zum Extrudieren eines Strangs aus extrudiertem Material, wobei ein Schüttgut mit einem erfindungsgemäßen Verfahren und/oder einer erfindungsgemäßen Vorrichtung einem Extruder zugeführt und in dem Extruder aufgeschmolzen und als Strang extrudiert wird.

Die Erfindung wird im Folgenden anhand der beiliegenden Zeichnungen an einigen Ausführungsformen näher erläutert. Es zeigen:
- Fig. 1: eine Schwingförder-Vorrichtung gemäß einer ersten Ausführungsform mit Höhenverstellung des Fülltrichters;
- Fig. 2: eine Schwingförder-Vorrichtung gemäß einer zweiten Ausführungsform mit Höhenverstellung der Förderrinne mit Schwingtreiber;
- Fig. 3: ein Diagramm der Abhängigkeit des Massedurchsatzes über eine Stellgröße und Schichthöhe unter dem Trichter;
- Fig. 4: ein Diagramm des Massedurchsatzes über eine Schwingweite und Schichthöhe unter dem Trichter; und
- Fig. 5: ein Flussdiagramm eines erfindungsgemäßen Verfahrens

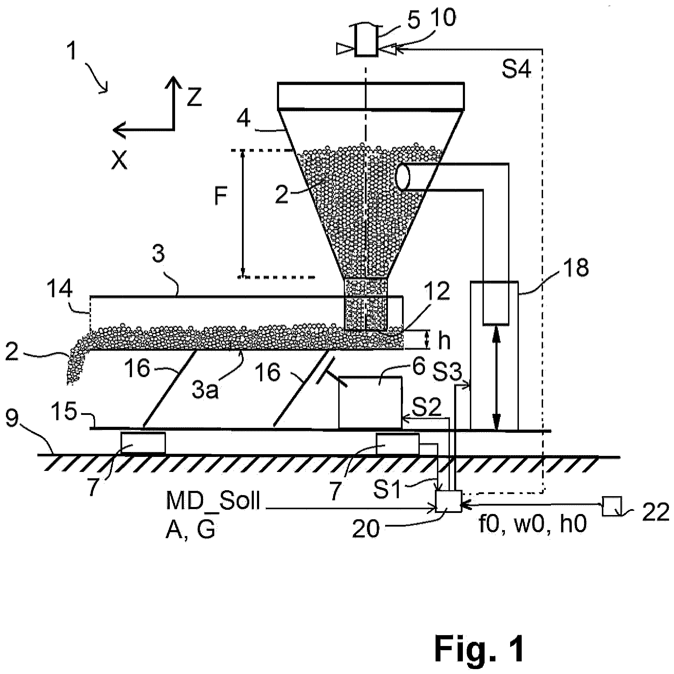

Figur 1 zeigt eine Schwingförder-Vorrichtung 1 zum kontinuierlichen Fördern von Schüttgut 2 mit einem einstellbaren Materialdurchsatz MD. Als Schüttgut 2 können unterschiedliche rieselfähige Güter gefördert werden, z. B. Pulver mit Korngrößen im Millimeter-Bereich oder auch weniger, bis hin z. B. zu Granulaten, Pellets und Flocken mit Körnergrößen im Zentimeter-Bereich. Die Schwingförder -Vorrichtung 1 weist eine Förderrinne 3, einen Fülltrichter 4, eine Materialzuführung 5, einen Schwingtreiber 6 sowie eine Waage 7 auf, wobei die Waage 7 und somit die gesamte Schwingförder-Vorrichtung 1 auf einem Untergrund 9 steht. Das Schüttgut 2 wird über die Materialzuführung 5, die z. B. ein elektrisch steuerbares Auslassventil 10 aufweist, in Füllphasen in den Fülltrichter 4 gefüllt, wodurch sich somit jeweils die Trichterfüllhöhe F im Fülltrichter 4 erhöht. Das Schüttgut 2 fällt nachfolgend aufgrund der Schwerkraft im Fülltrichter 4 nach unten und durch den unteren Trichterauslass 12 in die Förderrinne 3. Der untere Trichterauslass 12 ist hierbei in einer Schichthöhe h über der Förderrinne 3, z.B. dem Boden 3a der Förderrinne 3, angeordnet, so dass sich zunächst in der Förderrinne 3 Schüttgut 2 mit der Schichthöhe h sammelt.

Die Förderrinne 3 ist im Allgemeinen nach oben offen und kann einen unterschiedlichen Querschnitt, z. B. rechteckig, V-förmig oder halbrund, aufweisen, im Allgemeinen mit konstantem Querschnitt über die Länge der Förderrinne 3 bis zu ihrem Ende, d. h. der Materialausgabe 14. Hierbei kann die Förderrinne 3 horizontal, d. h. ohne Gefälle, oder auch mit leichtem Gefälle zur Materialausgabe 14 angeordnet sein. Die Förderrinne 3 ist über Blattfedern 16 auf einer Schwingtreiberbasis 15 angeordnet, wobei das schwingfähige System aus Förderrinne 3 und Blattfedern 16 über den Schwingtreiber 6 in Schwingungen versetzt wird, die im Allgemeinen schräg zur Förderrinne verlaufen, d.h. mit einer vertikalen z-Komponente und einer Längskomponente in Förderrichtung x zur Materialausgabe 14 hin. Weiterhin ist in der Ausführungsform der Figur 1 eine Höhenverstelleinrichtung 18 zur Höhenverstellung des Fülltrichters 4 gegenüber der Förderrinne 3 vorgesehen; somit wird die Schichthöhe h über die Höhenverstellvorrichtung 18 eingestellt. Die Höhenverstellvorrichtung 18 mitsamt des von ihr getragenen Fülltrichters 4 und dem in dem Fülltrichter 4 aufgenommenen Schüttgut 2, dem Schwingtreiber 6, und die Förderrinne 3 mitsamt dem in ihr aufgenommenen Schüttgut 2 einschließlich der Blattfedern 16 sind somit auf der Schwingtreiberbasis 15 aufgenommen, so dass diese gesamte Anordnung über die Waage 7 fortlaufend gewogen werden kann.

Durch den Schwingtreiber 6 wird die Förderrinne 3 mit den eingestellten Parametern, d. h. der Schwingweite (Wurfweite) w, die z.B. bis 1500 oder mehr µm betragen kann, und der Schwingfrequenz f, angetrieben. Das unter dem Trichterauslass 12 angesammelte Schüttgut 2 wird entsprechend in der Förderrinne 3 zur Materialausgabe 14 hin befördert und nachfolgend ausgegeben, so dass es dann nicht mehr zur gewogenen Gesamtmasse beiträgt. Der Materialdurchsatz MD gemessen werden kann, hängt von der Schichthöhe h, der Schwungweite w und der Schwingfrequenz f, sowie den materialspezifischen Parametern des Schüttgutes 2 ab.

So kann die Schwingfrequenz f auf einen festen Wert f0 eingestellt werden, insbesondere eine Schwingfrequenz f0 etwas unterhalb oder oberhalb einer Resonanzfrequenz fR des schwingfähigen Systems aus Förderrinne 3 und Blattfedern 16, so dass eine effektive Förderung mit hoher Ausnutzung der dem Schwingtreiber 6 zugeführten Energie und ohne Beschädigung des elastischen Systems erreicht wird.

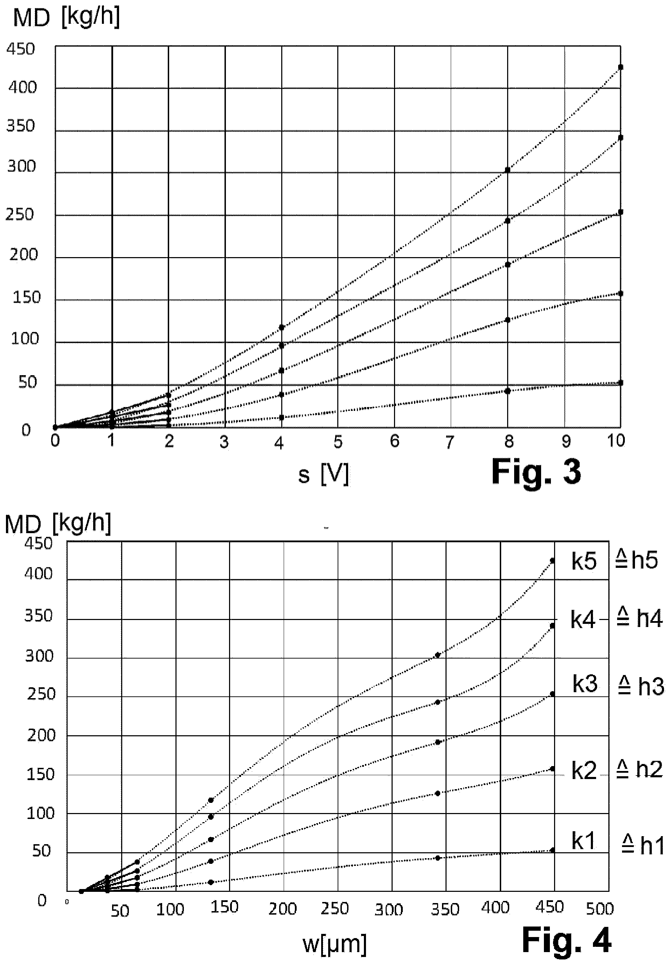

Weiterhin werden Anfangswerte h0 und w0 gewählt, die dann wie nachfolgend beschrieben angepasst bzw. geregelt werden. Die Anfangseinstellung bzw. Preset-Einstellung der Verfahrensparameter f0, h0, w0 für den angestrebten Massedurchsatz MD sind vorteilhafterweise in der Steuereinrichtung 20 bzw. in einem an die Steuereinrichtung 20 angeschlossenen Speicher 22 in materialspezifischen Kennlinien Ki, i=1, 2, 3,... gespeichert, die insbesondere aus Figur 3 und 4 ersichtlich sind. Die Kennlinien Ki werden insbesondere durch einzelne Messpunkte definiert, zwischen denen interpoliert werden kann. In Fig. 4 ist in den Kennlinien Ki der Massedurchsatz MD in Abhängigkeit der Schwingweite w und der Schichthöhe h gespeichert,

in Fig. 3 ist eine Abhängigkeit des Massedurchsatzes MD über eine Stellgröße s gezeigt, die z.B. s= 0 bis 10 V betragen kann; alternativ hierzu kann für die Stellgröße s auch die Stromstärke mit Werten z.B. bis 20 mA angesetzt werden.

In Fig. 4 ist somit z.B. vorgesehen:
die Kennlinie K1 für die Schichthöhe h1= 7,5 mm
die Kennlinie K2 für die Schichthöhe h2= 15 mm
die Kennlinie K3 für die Schichthöhe h3= 22,5 mm
die Kennlinie K4 für die Schichthöhe h4= 30 mm
die Kennlinie K5 für die Schichthöhe h5= 37,5 mm

Diese Werte sind vorzugsweise somit für die unterschiedlichen Materialarten A der Schüttgüter 2, weiterhin vorzugsweise auch zusätzlich in Abhängigkeit der Partikelgröße (Körnungsgröße) G, weiterhin vorzugsweise auch in Abhängigkeit der Temperatur T und gegebenenfalls des Feuchtigkeitsgrades gespeichert, d.h. für jede Materialart A und Partikelgröße G ein Kennlinienfeld entsprechend Fig. 4.

Vorteilhafterweise werden hierzu für gängige Schüttgüter 2 durch Kalibriermessung Werte gemäß Figur 3 und 4 ermittelt und in dem Speicher 22 gespeichert.

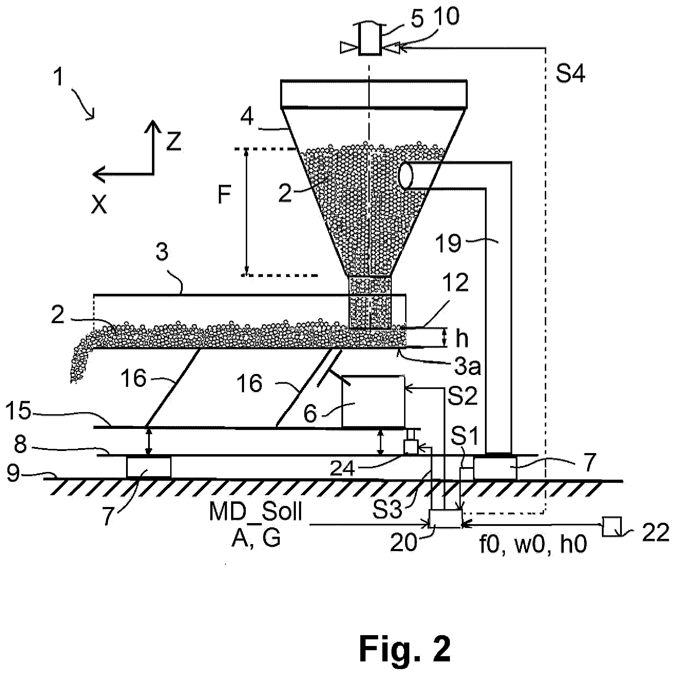

Bei der Ausführungsform der Figur 2 ist der Fülltrichter 4 mitsamt der nicht verstellbaren Trichteraufnahme 19 auf einer Basis 8 fest angeordnet. Die Schwingtreiberbasis 15 ist mitsamt Blattfedern 16, Förderrinne 3 und Schwingtreiber 6 über eine Höhenverstellvorrichtung 24 höhenverstellbar, so dass bei dieser Ausführungsform die Förderrinne 3 gegenüber dem unteren Trichterauslass 12 verstellt wird, um die Schichthöhe h einzustellen. Auch hier wird wiederum die gesamte Anordnung mitsamt Fülltrichter 4 über die Basis 8 mittels der Waage 7 verwogen.

Somit nimmt die Steuereinrichtung 20 in beiden Ausführungsformen Messsignale S1 der Waage 7 auf, die z.B. als Kraftmesseinheit oder Druckmesseinheit bzw. Druckmessdose ausgebildet sein kann, und gibt Steuersignale S2 an den Schwingtreiber 6, S3 die jeweilige Höhenverstellvorrichtung 18 (der Fig. 1) oder 24 (der Fig. 2) und S4 das Ausgabeventil 10 aus.

Weiterhin kann die Auswahl der Anfangs-Parameter des Schwingförderers, d.h. insbesondere Anfangs- Schwingfrequenz f0, Anfangs- Schichthöhe h0 und Anfangs-Schwingweite W0, unter Berücksichtigung relativer Förderabweichungen RF des Massedurchsatzes MD erfolgen. So gibt es Bereiche, insbesondere am Anfang und Ende der Stellgröße s, die eine höhere Ungenauigkeit im Förderverhalten an den Tag legen als mittlere Bereiche.

Somit kann ein Bereich mit geringer relativer Förderabweichungen RF gewählt werden, um eine hohe Konstanz des Materialdurchsatzes bei der Regelung der Stellgröße s zu erreichen.

So liegt z.B. bei den Werten
· Massedurchsatz MD 80kg/h
· Schichthöhe h 7mm (gering)
· Stellgröße s bei 95%
   eine relative Förderabweichung RF von 5% vor,
   hingegen bei den Werten
· Massedurchsatz MD 80kg/h
· Schichthöhe h 50mm (max)
· Stellgröße s bei 3%
· eine relative Förderabweichungen RF von 5% vor und bei den Werten
· Massedurchsatz MD 80kg/h
· Schichthöhe h 20mm (gering)
· Stellgröße s bei 30%
· eine relative Förderabweichung RF von 0,8% vor.

Ein Minimum der relativen Förderabweichungen RF wird somit nicht immer bei einem mittleren Wert der Schichthöhe oder Stellgröße liegen, so dass die Kenntnis von RF eine Einstellung mit hoher Förderkonstanz ermöglicht. Somit kann in diesem Beispiel eine relativ geringe Schichthöhe h gewählt werden. Die Daten der materialspezifischen Förderabweichung RF sind somit vorzugsweise Teil der Förderkennlinie K, die somit mehrdimensional gespeichert sein kann.

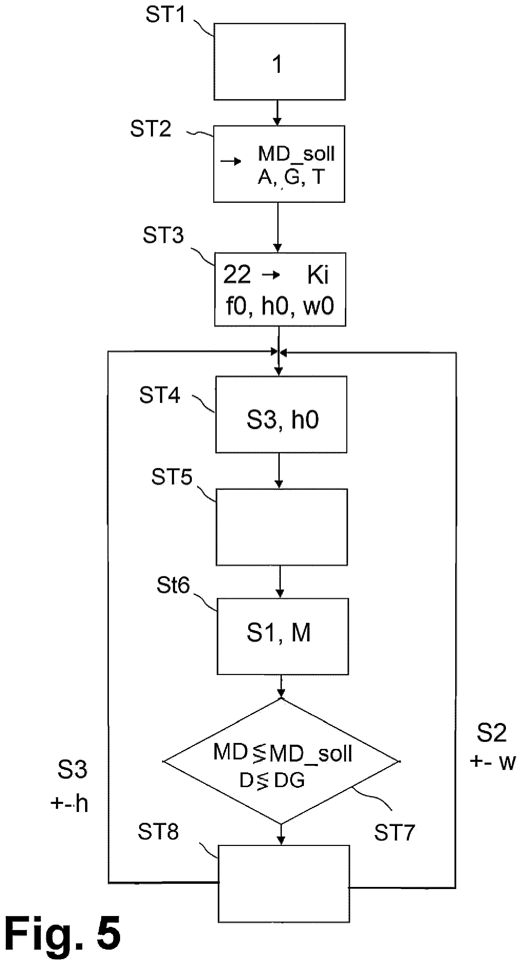

Bei dem erfindungsgemäßen Verfahren zur Schwingförderung des Schüttgutes 2 sind bei sämtlichen Ausführungsformen gemäß Fig. 5 folgende Schritte vorgesehen:
Zunächst erfolgt in Schritt ST1 die Bereitstellung der Schwingförder-Vorrichtung 1 mit den beschriebenen Merkmalen.

In Schritt ST2 erfolgt die Auswahl bzw. Eingabe des Soll- Materialdurchsatzes MD_soll und der relevanten materialspezifischen Werte für das Schüttgut 2, d.h. Materialart A und Partikelgröße G, gegebenenfalls auch weiterer Parameter wie Temperatur, Feuchtigkeitgrad des Schüttguts 2.

Hierzu ermittelt die Steuereinrichtung 20 in Schritt ST3 die relevante materialspezifische Kennlinie Ki, i=1, 2, 3,... und ruft diese aus dem Speicher 22 ab, woraufhin sie aus der Kennlinie Ki und dem Soll-Materialdurchsatz MD_soll die Anfangsparameter f0, h0, w0 ermittelt, wobei die Schwingfrequenz f0 vorzugsweise fest ist und nachfolgend im Betrieb bzw. Prozess auch nicht verändert wird. Vorzugsweise wird ein Kennlinienkriterium KK herangezogen, gemäß dem eine Kennlinie Ki gewählt wird , die Im Betrieb eine hinreichende Varianz bzw. Änderung in beide Richtungen, d. h. zu einem größeren Massedurchsatz MD und einem kleineren Massedurchsatz MD, erlaubt.

In Schritt ST4 erfolgt die Einstellung der Anfangs-Schichthöhe (Füllhöhe) h0 durch Ansteuerung der Höhenverstellvorrichtung 18 oder 24.

In Schritt ST5 erfolgt dann die Förderung, d.h. der Betrieb der Schwingförder-Vorrichtung 1, wozu die Steuereinrichtung 20 in Füllphasen das Ausgabeventil 10 ansteuert, wodurch phasenweise der Fülltrichter 4 befüllt wird unter Erhöhung der Gesamtmasse M, und weiterhin der Schwingtreiber 6 angesteuert wird, d.h. anfänglich mit den Anfangsparametern w0, h0; weiterhin nimmt die Steuereinrichtung 20 in Schritt ST6 das Messignal S1 der Waage 7 auf und ermittelt somit den aktuellen Massedurchsatz MD als Verhältnis Masse/Zeit.

In der Schwingförderung wird das Schüttgut 2 in der Förderrinne 3 in Förderwürfen des Schwingtreiber 6 befördert und gelangt zur Materialausgabe 14, wodurch es ausgegeben und nicht mehr mit verwogen wird; es wird nachfolgend z. B. einem Extruder oder einer anderen Verarbeitungseinrichtung zugeführt. Wie oben ausgeführt wird durch die Waage 7 in Fig. 1 die Anordnung auf der Schwingtreiberbasis 15 mitsamt der Schwingtreiberbasis 15 und in Fig. 2 die Anordnung auf der der Basis 8 verwogen, so dass entsprechend der Materialausgabe die ermittelte Gesamtmasse M mit der Zeit t abnimmt, was direkt als Materialdurchsatz MD in z. B. kg/h gemessen werden kann. Beim Erreichen einer unteren Trichterfüllhöhe F in dem Fülltrichter 4, der insbesondere als Erreichen eines unteren Massewertes ermittelt werden kann, wird wiederum das Ausgabeventil 10 geöffnet und die nächste Füllmenge oder Füllcharge aus Schüttgut 2 in den Fülltrichter 4 eingegeben. Diese Füllphasen sind relativ kurz und werden vorteilhafterweise bei der Ermittlung des Materialdurchsatzes MD nicht berücksichtigt oder abgeschätzt, d. h. es wird für die Zeitdauer der Förderphase z.B. der vorermittelte durchschnittliche Materialdurchsatz MD angenommen. Somit wird eine kontinuierliche Förderung über den Schwingtreiber 6 erreicht.

Gemäß einer weiteren Ausführungsform kann ausschließlich die Materialentnahme im Fülltrichter 4 verwogen werden, d. h. unabhängig von der Füllung der Förderrinne 3 die Materialentnahme im Fülltrichter 4 entspricht somit dem Materiedurchsatz MD, insbesondere bei entsprechender zeitlicher Mittelung.

In Schritt ST7 erfolgt die Bewertung des ermittelten Materialdurchsatzes MD durch Vergleich mit dem Soll-Materialdurchsatz MD_soll. Die Steuereinrichtung 20 bewertet den gemessenen Materiedurchsatz MD,
um nachfolgend in Schritt ST8 eine Änderung der Betriebsparameter vorzunehmen, d.h. insbesondere der Wurfweite W und/oder der Schichthöhe h. Somit erfolgt eine Erhöhung der Schichthöhe h und/oder der Wurfweite W, wenn der Materialdurchsatz MD kleiner als der Soll-Materialdurchsatz MD_soll ist, und entsprechend eine Verringerung, wenn er zu hoch ist.

Dann erfolgt die Regelung durch Rückführung vor den Schritt ST4, d.h. die Einstellung der ermittelten geänderten Betriebsparameter.

Bei der Bewertung in Schritt ST7 wird insbesondere entschieden, ob die Schichthöhe h und/oder die Schwingweite W geändert werden soll. Dies kann insbesondere als Grobregelung durch Änderung der Schichthöhe h und Feineinstellung durch Änderung der Schwingweite W erfolgen. Hierzu wird z.B. ein Differenzwert D als Betrag der Differenz des Materialdurchsatzes MD und des Soll-Materialdurchsatzes MD_soll gebildet, und der Differenzwert D mit einem Differenz-Grenzwert DG verglichen wird und bei Überschreiten des Differenz-Grenzwertes DG die Schichthöhe h geändert, d.h. durch ein Steuersignal S3 die Höhenverstellvorrichtung 18, 24 angesteuert , und bei Unterschreiten des Differenz-Grenzwertes DG die Schwingweite W geändert, d.h. durch ein Steuersignal S2 wird und der Schwingtreiber 6 angesteuert.

Hierbei kann insbesondere eine Proportionalregelung erfolgen, d.h. eine Änderung der Schichthöhe h oder Schwingweite W um einen der Differenz des Materiedurchsatzes entsprechenden Wert

Gemäß den Kennlinien der Figur 3 und Figur 4 wird somit vorteilhafterweise bei Änderung der Schichthöhe h eine andere Kennlinie Ki gewählt, auf der nachfolgend dann die Schwingweite W eingestellt wird. Bei einer Änderung der Schichthöhe h erfolgt somit im Allgemeinen nachfolgend eine entsprechende Anpassung der Schwingweite W, da vorteilhafterweise vorgegebene Höheneinstellungen oder diskrete Höhenwerte der Schichthöhe h eingestellt werden, auf denen nachfolgend die Feineinstellung oder Feinregelung durch Einstellung der Schwingweite W, d.h. entlang der Kennlinie Ki erfolgt.

Hierbei berücksichtigt die Steuereinrichtung 20, gemäß den Kennlinien eine hinreichende Varianz nach unten und oben u haben, d. h. es wird eine Schichthöhe h eingestellt, die Änderungen des Materiedurchsatzes MD zu kleineren und größeren Werten allein durch Ansteuerung des Schwingtreibers 6 ermöglichen.

Vorzugsweise können somit auch Änderungen im Prozess, z. B. durch Änderungen der Temperatur des Schüttgutes 2, sowie auch weiteren geänderten Parametern wie der Feuchtigkeit, sowie ggf. auch Materialänderungen im zugeführten Schüttgut 2, dynamisch berücksichtigt werden.

Vorzugsweise können Änderungen im Soll- Materiedurchsatz MD_soll während des Betriebs berücksichtigt werden, z. B. als Rampen bzw. lineare Übergänge bei Durchsatzänderungen.

Weiterhin kann die Steuereinrichtung 20 die aktuellen Messungen und Einstellungen, d. h. das Verhältnis vom Materiedurchsatz MD als Funktion der eingestellten Höhenparameter der Schichthöhe h und der Schwingweite W bei der Schwingfrequenz f, im Speicher 22 abspeichern, bzw. diese Daten somit dynamisch korrigieren, so dass auch Änderungen der Vorrichtung über längere Betriebszeiträume berücksichtigt werden.

### Bezugszeichenliste

- 1: Schwingförder-Vorrichtung
- 2: Schüttgut
- 3: Förderrinne (Rüttelrinne)
- 4: Fülltrichter
- 5: Materialzuführung
- 6: Schwingtreiber
- 7: Waage, Kraftmesseinrichtung
- 8: Basis
- 9: Untergrund
- 10: Ausgabeventil in der Materialzuführung 5
- 12: Trichterauslass
- 14: Materialausgabe am Ende der Förderrinne 3
- 15: Schwingtreiberbasis
- 16: Blattfedern
- 18: Höhenverstelleinrichtung des Fülltrichters 4 (Figur 1)
- 19: (starre) Trichteraufnahme (Figur 2)
- 20: Steuereinrichtung
- 22: Speichereinrichtung
- 24: Höhenverstelleinrichtung zur Verstellung der Schwingtreiberbasis 15 (Figur 2)

- A: Materialart
- D: Differenzwert als Betrag der Differenz des Materialdurchsatzes MD und des Soll-Materialdurchsatzes (MD_soll)
- DG: Differenz-Grenzwert
- f: Schwingfrequenz
- f0: Anfangs- Schwingfrequenz als Anfangs-Parameter
- G: Partikelgröße (Körnungsgröße)
- h: Schichthöhe, Füllhöhe; Abstand zwischen Trichterauslass 12 und Boden der Förderrinne 3
- h0: Anfangs- Schichthöhe als Anfangs-Parameter
- M: Gesamtmasse
- M_l: Minimal-Gesamtmasse
- MD: Materialdurchsatz
- MD_soll: Soll- Materialdurchsatz
- RF: relative Förderabweichung
- s: Stellgröße

- S1: Messsignal der Waage 7
- S2: Steuersignal an den Schwingtreiber 6
- S3: Steuersignal an die jeweilige Höhenverstellvorrichtung 18, 24
- S4: Steuersignal an das Ausgabeventil für die Füllphasen

- W: Schwingweite
- W0: Anfangs-Schwingweite als Anfangs-Parameter
- X: Förderrichtung
- Z: vertikale Richtung

## Patentansprüche

1. Verfahren zur Schwingförderung von Schüttgut (2), mit den Schritten:
- Bereitstellen einer Schwingförder-Vorrichtung (1) mit einer Materialzuführung (5), einem Fülltrichter (4) mit einem Trichterauslass (12), einer Förderrinne (3), einer Höhenverstelleinrichtung (18, 24) zur Verstellung einer Schichthöhe (h) zwischen dem Trichterauslass (12) und der Förderrinne (3), und einem Schwingtreiber (6) zum Antreiben der Förderrinne (3) mit einer Schwingweite (W) und einer Schwingfrequenz (f) (Schritt ST1),
- Aufnahme oder Eingabe eines Soll-Materialdurchsatzes (MD_soll) und materialspezifischer Parameter (A, D) des Schüttguts (2) (Schritt ST2),
- Ermittlung von Anfangs-Parametern (h0, W0, f0) als Betriebsparameter, wobei die Betriebsparameter (h, W, f) eine Schichthöhe (h), Schwingweite (W) und Schwingfrequenz (f) umfassen (Schritt ST3),
- Einstellen der Schichthöhe (h) durch Ansteuern der Höhenverstelleinrichtung (18, 24) (Schritt ST4),
- Betrieb der Schwingförder-Vorrichtung (1) (Schritt ST5) durch
= Befüllen des Fülltrichters (4) in Füllphasen und
= Ansteuern des Schwingtreibers (6) mit der Schwingweite (W) und Schwingfrequenz (f),
= unter Ausgabe des Schüttguts (2) an der Materialausgabe (14) der Förderrinne (3),
- Wiegemessung einer Gesamtmasse (M) als Funktion der Zeit (t) und Ermittlung eines aktuellen Materialdurchsatzes (MD) (Schritt ST6),
- Bewertung des ermittelten Materialdurchsatzes (MD) durch Vergleich mit dem Soll-Materialdurchsatz (MD_soll) (Schritt ST7) und
- in Abhängigkeit der Bewertung eine Änderung der Betriebsparameter (h,W,f) (Schritt ST8) und Rückführung vor den Schritt (Schritt ST4) der Einstellung der Schichthöhe (h).

2. Verfahren nach Anspruch 1, **dadurch gekennzeichnet, dass** als Betriebsparameter eine feste Schwingfrequenz (f0) eingestellt ist und bei dem Schritt der Änderung der Betriebsparameter (h,W,f) (ST8) in Abhängigkeit der Bewertung die Schwingweite (W) und/oder die Schichthöhe (h) geändert wird.

3. Verfahren nach Anspruch 2, **dadurch gekennzeichnet, dass**
bei der Bewertung des ermittelten Materialdurchsatzes (MD) ein Differenzwert (D) als Betrag der Differenz des Materialdurchsatzes (MD) und des Soll-Materialdurchsatzes (MD_soll) gebildet wird,
der Differenzwert (D) mit einem Differenz-Grenzwert (DG) verglichen wird und
bei Überschreiten des Differenz-Grenzwertes (DG) die Schichthöhe (h) geändert wird, und
die Höhenverstellvorrichtung (18, 24) angesteuert wird zur Änderung der Schichthöhe (h) und/oder der Schwingtreiber angesteuert wird zur Änderung der Schwingweite (W).

4. Verfahren nach Anspruch 3, **dadurch gekennzeichnet, dass**
bei Unterschreiten des Differenz-Grenzwertes (DG) die Schwingweite (W) geändert wird und der Schwingtreiber (6) angesteuert wird zur Änderung der Schwingweite (W) als Feineinstellung.

5. Verfahren nach einem der vorherigen Ansprüche, **dadurch gekennzeichnet, dass**
- bei Ermittlung der Anfangs- Schwingweite (W0) und der Anfangs-Schichthöhe (ho) als Anfangs-Parameter (W0, h0) (Schritt ST3) in Abhängigkeit des eingegebenen Soll-Materialdurchsatzes (MD_soll) und der eingegebenen materialspezifischen Parameter des Schüttguts (2) aus einer Speichereinrichtung (22) vorgespeicherte materialspezifische Kennlinien (Ki) ausgelesen werden, die den Materialdurchsatzes (MD) in Abhängigkeit einer oder mehrerer der folgenden Größen festlegen: eine Materialart (A), eine Partikelgröße (G), die Schwingweite (W) die Schichthöhe (h), eine relative Förderabweichung (RF), und
- eine Kennlinie (Ki, i=1, 2, ..) ausgewählt wird.

6. Verfahren nach Anspruch 5, **dadurch gekennzeichnet, dass** die Kennlinien als diskrete Kennlinien (Ki) gespeichert sind,
wobei für unterschiedliche Materialarten (A) und Körnungsgrößen (G) jeweils ein Kennlinienfeld (Fig. 4) mit mehreren Kennlinien (Ki) gespeichert ist, die jeweils für eine Schichthöhe (h) den Materialdurchsatz (MD) in Abhängigkeit einer Stellgröße (s) definieren,
wobei die Stellgröße (s) die Schwingweite (W) und/oder die Schwingfrequenz (f) angibt.

7. Verfahren nach Anspruch 5 oder 6, **dadurch gekennzeichnet, dass** jeweils in Abhängigkeit eines Kennlinien-Kriteriums (KK) eine Kennlinie (Ki) aus den mehreren Kennlinien (Ki) ausgewählt wird,
wobei das Kennlinien-Kriterium (KK)
einen mittleren Wert und/oder einen Mindestabstand von den Endwerten der Kennlinie (Ki) und/oder eine geringe relative Förderabweichung (RF) festlegt, zur Ausbildung einer hohen Varianz oder Änderungsmöglichkeit während des Regelverfahrens.

8. Verfahren nach einem der Ansprüche 5 bis 7, **dadurch gekennzeichnet, dass** eine Kennlinie (Ki) mit Anfangs-Parametern (W0, h0, f0) ausgewählt wird
- für eine geringe oder geringsten Anfangs-Schwingweite (W0) gewählt wird, für eine hohe Energie-Effizienz, und/oder
- mit einer geringen relativen Förderabweichung (RF) in Abhängigkeit einer Stellgröße (s), zur Ausbildung eines konstanten Materialdurchsatzes (MD) bei einer Regelung des Materialdurchsatzes (MD) durch Ändern der Stellgröße (s).

9. Verfahren nach einem der Ansprüche 5 bis 8, **dadurch gekennzeichnet, dass** die Kennlinien (Ki) im Speicher (22) aktualisiert, erweitert oder geändert werden, indem der aktuell ermittelte Materiedurchsatz (MD) als Funktion der Betriebsparameter gespeichert werden.

10. Verfahren nach einem der vorherigen Ansprüche, **dadurch gekennzeichnet, dass**
- bei der Wiegemessung der Gesamt-Masse (M) (Schritt ST6) eine Anordnung gewogen wird, die gebildet ist aus:
dem Fülltrichter (4) mit dem aufgenommenem Schüttgut (2), der Förderrinne (3) mit dem aufgenommenem Schüttgut (2) und dem Schwingtreiber (6) und der Trichteraufnahme (18), sowie der Höhenverstellvorrichtung (18, 24),
- und der aktuelle Materialdurchsatz (MD) als eine zeitliche Abnahme der gemessenen Gesamt-Masse (M) ermittelt wird

11. Verfahren nach Anspruch 10, **dadurch gekennzeichnet, dass**
. die zeitliche Abnahme der gemessenen Gesamt-Masse (M) als Materialauswurf aus der Materialausgabe (14) ermittelt wird.

12. Verfahren nach einem der vorherigen Ansprüche, **dadurch gekennzeichnet, dass** der Fülltrichter (4) nur in den Füllphasen und nur chargenweise befüllt wird durch Ansteuerung einer Zuführeinrichtung, insbesondere eines Ausgabeventils (10) in einer Materialzuführung (5) zu dem Fülltrichter (4), wobei ein Zeitpunkt (t-f) einer Einleitung einer Füllphase in Abhängigkeit der ermittelten Gesamtmasse (M) ermittelt wird,
wobei eine in einer Füllphase zugeführte Masse des Schüttgutes (2) als Differenz der Gesamtmasse (M) vor dem Zeitpunkt (t-f) der Einleitung der Füllphase und einer Gesamtmasse (M) nach Beendigung der Füllphase ermittelt wird.

13. Verfahren nach einem der vorherigen Ansprüche, **dadurch gekennzeichnet, dass**
- das Schüttgut (2) ausgebildet ist als ein durch Rütteln fluidisierbares Material, .
- wobei das Schüttgut (2) ausgewählt ist:
aus einer oder mehreren der folgenden Materialarten (A): Kunststoff, Kies, Stein, Sand, Gummi, Lebensmittel wie Mehl, Getreide,
und/oder aus einem der folgenden fluidisierbaren Materialien:
Granulat, Gries, Pulver, Regranulat, Schredderpartikel, Körner, oder Flocken..

14. Schwingförder-Vorrichtung (1) zum Schwingfördern von Schüttgut (2), die aufweist:
- einen Fülltrichter (4) zur Aufnahme von Schüttgut (2) mit einem unterem Trichterauslass (12),
- eine Förderrinne (3) die unterhalb des Fülltrichter (4) angeordnet ist und eine Materialausgabe (14) zur Ausgabe des Schüttguts (2) aufweist, wobei der Trichterauslass (12) in einer Schichthöhe (h) oberhalb der Förderrinne (3) angeordnet ist,
- eine elastische Aufhängung (16), eine Schwingtreiberbasis (15) und einen Schwingtreiber (6) zum Antreiben der Förderrinne (3) mit einer Schwingfrequenz (f) und einer Schwingweite (B),
eine Höhenverstellvorrichtung (18, 24) zur Verstellung der Schichthöhe (h),
- eine Waage (7) zur Messung einer Gesamtmasse (M),
- eine Steuereinrichtung (20), die eingerichtet ist für
= eine Aufnahme eines Soll-Materialdurchsatzes (MD_soll) und materialspezifischer Parameter (A, D),
= Ausgabe von Steuersignalen (S2) an den Schwingtreiber (6) zur Einstellung einer Schwingweite (W) und Schwingfrequenz (f),
= Ausgabe von Steuersignalen (S3) an die Höhenverstellvorrichtung (24) zur Einstellung der Schichthöhe (h),
= Aufnahme eines Massemesswertes der Waage (7), und
= Ermittlung eines Materialdurchsatzes (MD) aus den Massemesswerten in Abhängigkeit der Zeit,
= Bewertung des Materialdurchsatzes (MD) durch Vergleich mit einem Soll-Materialdurchsatz (MD_soll) und
= nachfolgende Ausgabe von Steuersignalen (S2, S3) an den Schwingtreiber (6) und/oder die Höhenverstellvorrichtung (18, 24) in Abhängigkeit der Bewertung,
**dadurch gekennzeichnet, dass**
die Waage (7) eine Gesamtmasse (M) einer Anordnung aus zumindest der Höhenverstellvorrichtung (18, 24), dem Fülltrichter (4), dem Schwingtreiber (6), der Förderrinne (3), der elastischen Aufhängung (16) und der Schwingtreiberbasis (15), mitsamt dem in dem Fülltrichter (4) und der Förderrinne aufgenommenen Schüttgut (2) misst.

15. Schwingförder-Vorrichtung (1) nach Anspruch 14, **dadurch gekennzeichnet, dass** die Höhenverstellvorrichtung (18, 24) zur Verstellung einer vertikalen Höhe des Fülltrichters (4) gegenüber der Förderrinne (3) und/oder zur Verstellung einer vertikalen Höhe der Förderrinne (3) gegenüber dem Fülltrichters (4) vorgesehen ist.

16. Schwingförder-Vorrichtung (1) nach Anspruch 14 oder 15, **dadurch gekennzeichnet, dass** sie eine elastische Aufhängung (16) der Förderrinne (3) auf einer Schwingtreiberbasis (15) aufweist, die eine Schwingung in einer kombinierten Richtung aus der Förderrichtung (x) und der vertikalen Richtung (z) zulassen.

## Claims

1. Method for vibration feeding of bulk material (2), including the steps:
- providing a vibration feeder device (1) including a material feed (5), a charging hopper (4) with a hopper discharge (12), a feeder tray (3), a height adjustment means (18, 24) for adjusting a level height (h) between the hopper discharge (12) and the feeder tray (3), and a vibration driver (6) for driving said feeder tray (3) at an oscillation amplitude (W) and an oscillation frequency (f) (step ST1),
- receiving or inputting a target material throughput (MD_soll) and material specific parameters (A, D) of the bulk material (2) (step ST2),
- determining initial parameters (h0, W0, f0) as operating parameters, said operating parameters (h, W, f) including a level height (h), oscillation amplitude (W) and oscillation frequency (f) (step ST3),
- setting the level height (h) by controlling the height adjustment means (18, 24) (step ST4),
- operating the vibration feeder device (1) (step ST5) by
= filling the charging hopper (4) in filling phases and
= controlling the vibration driver (6) at the oscillation amplitude (W) and oscillation frequency (f),
= discharging the bulk material (2) at the material discharge (14) of the feeder tray (3),
- weight measuring a total mass (M) as a function of time (t) and determining a current material throughput (MD) (step ST6),
- evaluating the determined material throughput (MD) by comparing it to the target material throughput (MD_soll) (step ST7), and
- depending on the evaluation, changing the operating parameters (h,W,f) (step ST8) and resetting to a point before the step (step ST4) of setting the level height (h).

2. Method according to claim 1, **characterized in that**, as operating parameters, a fixed oscillation frequency (f0) is set, and
at the step of changing the operating parameters (h,W,f) (ST8), depending on the evaluation, the oscillation amplitude (W) and/or the level height (h) is changed.

3. Method according to claim 2, **characterized in that**, in evaluating the determined material throughput (MD), a differential value (D) is formed as the amount of the difference of the material throughput (MD) and the target material throughput (MD_soll),
said differential value (D) is compared to a difference threshold value (DG), and
upon exceeding the difference threshold value (DG) the level height (h) is changed, and
the height adjustment device (18, 24) is controlled to change the level height (h), and/or the vibration driver is controlled to change the oscillation amplitude (W).

4. Method according to claim 3, **characterized in that**
upon falling below the difference threshold value (DG) the oscillation amplitude (W) is changed, and the vibration driver (6) is controlled to change the oscillation amplitude (W) as fine adjustment.

5. Method according to one of the above claims, **characterized in that**
- when determining the initial oscillation amplitude (W0) and the initial level height (ho) as the initial parameters (W0, h0) (step ST3), depending on the input target material throughput (MD_soll) and the input material specific parameters of the bulk material (2), prestored material specific characteristic curves (Ki) are read out from a storage means (22) which determine the material throughput (MD) as a function or one or more of the following variables:
a type of material (A), a particle size (G), the oscillation amplitude (W), the level height (h), a relative transport rate deviation (RF), and
- a characteristic curve (Ki, i=1, 2, ..) is selected.

6. Method according to claim 5, **characterized in that** the characteristic curves are stored as discrete characteristic curves (Ki),
where for different types of material (A) and grain sizes (G) always one characteristic curve field (Fig. 4) each with several characteristic curves (Ki) is stored, each defining for a certain level height (h) the material throughput (MD) as a function of a corrective variable (s),
where the corrective variable (s) indicates the oscillation amplitude (W) and/or the oscillation frequency (f).

7. Method according to claim 5 or 6, **characterized in that**, always depending on a certain characteristic curve criterion (KK), one characteristic curve (Ki) is selected from the plurality of characteristic curves (Ki),
said characteristic curve criterion (KK) defining
an average value and/or a minimum distance from the end values of the characteristic curve (Ki) and/or a small relative transport rate deviation (RF), so as to generate a wide variance or possibility of changes during the regulating process.

8. Method according to one of the claims 5 through 7, **characterized in that** one characteristic curve (Ki) with initial parameters (W0, h0, f0) is selected
- for a small or smallest initial oscillation amplitude (W0), so as to attain high energy efficiency, and/or
- with a low relative transport rate deviation (RF) as a function of a corrective variable (s), so as to generate a constant material throughput (MD) when regulating the material throughput (MD) by changing the corrective variable (s).

9. Method according to one of the claims 5 through 8, **characterized in that** the characteristic curves (Ki) in the memory (22) are updated, extended or changed **in that** the currently determined material throughput (MD) is stored as a function of the operating parameters.

10. Method according to one of the above claims, **characterized in that**
- upon weight measuring the total mass (M) (step ST6) an arrangement is weighed, consisting of:
the charging hopper (4) including the bulk material (2) therein contained, the feeder tray (3) including the bulk material (2) therein contained and the vibration driver (6), and the hopper holder (18), as well as the height adjustment device (18, 24),
- and the current material throughput (MD) is determined as a temporal decrease of the total mass (M) measured.

11. Method according to claim 10, **characterized in that** the temporal decrease of the total mass (M) measured is determined as discharge of material from the material discharge (14).

12. Method according to one of the above claims, **characterized in that** the charging hopper (4) is filled only during the filling phases and only in charges by controlling a feed-in means, in particular an output valve (10) in a material feed (5) to the charging hopper (4),
where a point in time (t-f) of an initiation of a filling phase is determined depending on the total mass (M) measured,
where a mass of bulk material (2) fed-in during a filling phase is determined as the difference of the total mass (M) prior to the point in time (t-f) of the initiation of the filling phase and a total mass (M) after termination of the filling phase.

13. Method according to one of the above claims, **characterized in that**
- the bulk material (2) is a material that can be fluidized by vibration,
- said bulk material (2) being selected:
from one or more of the following types of material (A): plastics, gravel, stone, sand, rubber, food such as flour, crop,
and/or from one of the following materials capable of being fluidized: granulate, chips, powder, re-granulate, shredded particles, corns, or flakes.

14. Vibration feeder device (1) for vibration feeding of bulk material (2), comprising:
- a charging hopper (4) for receiving bulk material (2) including a bottom hopper discharge (12),
- a feeder tray (3) arranged below the charging hopper (4) and comprising a material discharge (14) for putting out the bulk material (2),
said hopper discharge (12) being arranged at a level height (h) above the feeder tray (3),
- an elastic suspension (16), a vibration driver base (15), and a vibration driver (6) for driving the feeder tray (3) at an oscillation frequency (f) and an oscillation amplitude (B),
a height adjustment device (18, 24) for adjusting the level height (h),
- a scales (7) for measuring a total mass (M),
- a controller means (20) which is adapted to
= receiving a target material throughput (MD_soll) and material specific parameters (A, D),
= putting out control signals (S2) to the vibration driver (6) for adjusting an oscillation amplitude (W) and oscillation frequency (f),
= putting out von control signals (S3) to the height adjustment device (24) for adjusting the level height (h),
= receiving a measured mass value from the scales (7), and
= determining a material throughput (MD) from the measured mass values depending on time,
= evaluating the material throughput (MD) by comparing it to a target material throughput (MD_soll), and
= subsequently putting our control signals (S2, S3) to the vibration driver (6) and/or the height adjustment device (18, 24) depending on the evaluation,
**characterized in that**
the scales (7) measure a total mass (M) of an arrangement consisting or at least the height adjustment device (18, 24), the charging hopper (4), the vibration driver (6), the feeder tray (3), the elastic suspension (16), and the vibration driver base (15), including the bulk material (2) contained in the charging hopper (4) and the feeder tray.

15. Vibration feeder device (1) according to claim 14, **characterized in that** the height adjustment device (18, 24) is provided for adjusting a vertical height of the charging hopper (4) in relation to the feeder tray (3) and/or for adjusting a vertical height of the feeder tray (3) in relation to the charging hopper (4).

16. Vibration feeder device (1) according to claim 14 or 15, **characterized in that** it comprises an elastic suspension (16) of the feeder tray (3) on a vibration driver base (15), allowing vibration in a combined direction from the direction of transport (x) and the vertical direction (z).

## Revendications

1. Procédé de convoyage oscillant de produits en vrac (2), ledit procédé comportant les étapes suivantes qui consistent à :
- fournir un dispositif de convoyage oscillant (1) avec une amenée de matière (5), une trémie de chargement (4) avec une sortie de trémie (12), une goulotte de convoyage (3), un dispositif de réglage en hauteur (18, 24) pour le réglage d'une hauteur de couche (h) entre la sortie de trémie (12) et la goulotte de convoyage (3) et un actionneur oscillant (6) pour actionner la goulotte de convoyage (3) avec une amplitude d'oscillation (W) et une fréquence d'oscillation (f) (étape ST1),
- enregistrer ou entrer un débit de matière à atteindre (MD_soll) et des paramètres (A, D) spécifiques au produit en vrac (2) (étape ST2),
- déterminer des paramètres initiaux (h0, W0, f0) comme paramètres opératoires, lesdits paramètres opératoires (h, W f) comprenant une hauteur de couche (h), une amplitude d'oscillation (W) et une fréquence d'oscillation (f) (étape ST3),
- régler la hauteur de couche (h) en commandant le dispositif de réglage en hauteur (18, 24) (étape ST4),
- mettre le dispositif de convoyage oscillant (1) en fonctionnement (étape ST5) en remplissant la trémie de chargement (4) au cours de phases de chargement et en commandant l'actionneur oscillant (6) avec l'amplitude d'oscillation (W) et la fréquence d'oscillation (f), tout en distribuant le produit en vrac (2) à la sortie de matière (14) de la goulotte de convoyage (3).
- mesurer une masse totale (M) par pesée en fonction du temps (t) et déterminer un débit de matière actuel (MD) (étape ST6),
- évaluer le débit de matière actuel déterminé (MD) par comparaison avec le débit de matière à atteindre (MD_soll) (étape ST7), et
- en fonction de l'évaluation, modifier des paramètres opératoires (h,W,f) (étape ST8) et retourner avant l'étape de réglage de la hauteur de couche (h), (étape ST4).

2. Procédé suivant la revendication 1, **caractérisé en ce qu'**une fréquence d'oscillation fixe (f0) est réglée comme paramètre opératoire et à l'étape de modification des paramètres opératoires (h,W,f) (ST8) sont modifiées selon l'évaluation, l'amplitude d'oscillation (W) et/ou la hauteur de couche (h).

3. Procédé suivant la revendication 2, **caractérisé en ce qu'**à l'évaluation du débit de matière déterminé (MD), une valeur de différence (D) est formée comme montant de la différence entre le débit de matière (MD) et le débit de matière à atteindre (MD_soll), la valeur de différence (D) étant comparée à une valeur limite de différence (DG) et en cas de dépassement de la valeur limite de différence (DG), la hauteur de couche (h) est modifiée, et le dispositif de réglage en hauteur (18, 24) est commandé pour modifier la hauteur de couche (h) et/ou l'actionneur oscillant est commandé pour modifier l'amplitude d'oscillation (W).

4. Procédé suivant la revendication 3, **caractérisé en ce qu'**à sous-dépassement de la valeur limite de différence (DG), l'amplitude d'oscillation (W) est modifiée et l'actionneur oscillant (6) est commandé pour modifier l'amplitude d'oscillation (W) comme réglage fin.

5. Procédé suivant une des revendications précédentes, **caractérisé en ce qu'**à la détermination de l'ampleur d'oscillation initiale (W0) et de la hauteur de couche initiale (ho) comme paramètres initiaux (W0, h0) (étape ST3) en fonction du débit de matière à atteindre (MD_soll) entré et des paramètres spécifiques aux produits en vrac entrées (2), des courbes caractéristiques (Ki) pré-enregistrées spécifiques à la matière (Ki) sont lues dans un dispositif de stockage (22), courbes, qui fixent le débit de matière (MD) en fonction d'une ou de plusieurs des grandeurs suivantes : un type de matière (A), une grosseur de particule (G), l'ampleur d'oscillation (W), la hauteur de couche (h), un écart de convoyage relatif (RF) et une courbe caractéristique (Ki, i=1, 2,...) est sélectionnée.

6. Procédé suivant la revendication 5, **caractérisé en ce que** les courbes caractéristiques sont mémorisées comme courbes caractéristiques discrètes (Ki), respectivement un champ de courbes caractéristiques (figure 4) avec plusieurs courbes caractéristiques (Ki) est mémorisé pour différents types (A) et grosseurs de grains (G), qui définissent respectivement le débit de matière (MD) pour une hauteur de couche (h) en fonction d'une grandeur de réglage (s), ladite grandeur de réglage (s) indiquant l'ampleur d'oscillation (W) et/ou la fréquence d'oscillation (f).

7. Procédé suivant la revendication 5 ou 6, **caractérisé en ce qu'**une courbe caractéristique (Ki) est sélectionnée respectivement parmi les plusieurs courbes caractéristiques (Ki) en fonction d'un critère de courbe caractéristique (KK), ledit critère de courbe caractéristique (KK) spécifiant une valeur moyenne et/ou une distance moyenne par rapport aux valeurs finales de la courbe caractéristique (Ki) et/ou un écart de convoyage relativement faible (RF) pour former une variance ou possibilité de modification élevée au cours du procédé de réglage.

8. Procédé suivant une des revendications 5 à 7, **caractérisé en ce qu'**une courbe caractéristique (Ki) avec des paramètres initiaux (W0, h0, f0) est sélectionnée pour une amplitude d'oscillation initiale faible ou la plus faible (W0), pour une efficacité énergétique élevée, et/ou avec un écart de convoyage relativement faible (RF) en fonction d'une grandeur de réglage (s), pour former un débit de matière constant (MD) en cas de réglage du débit de matière (MD) par modification de la grandeur de réglage (s).

9. Procédé suivant une des revendications 5 à 8, **caractérisé en ce que** les courbes caractéristiques (Ki) sont actualisées, élargies ou modifiées dans la mémoire en enregistrant le débit de matière actuellement déterminé (MD) en tant que fonction des paramètres opératoires.

10. Procédé suivant une des revendications précédentes, **caractérisé en ce que** la mesure par pesée de la masse totale (M) (étape ST6) consiste à peser un agencement formé d'une trémie de chargement (4) avec le produit en vrac reçu (2), la goulotte de convoyage (3) avec le produit en vrac reçu (2) et l'actionneur oscillant (6) et la monture de trémie (18), ainsi que le dispositif de réglage en hauteur (18, 24), et **en ce que** le débit de matière actuel (MD) est déterminé comme réduction temporelle de la masse totale mesurée (M).

11. Procédé suivant la revendication 10, **caractérisé en ce que** la réduction temporelle de la masse totale mesurée (M) est déterminée comme éjection de matière par la sortie de matériaux (14).

12. Procédé suivant une des revendications précédentes, **caractérisé en ce que** la trémie de chargement (4) n'est remplie que dans les phases de remplissage et uniquement par lots en commandant un dispositif d'amenée, en particulier une valve de distribution (10) incluse dans un dispositif d'amenée (5), vers la trémie de chargement (4), un moment (t-f) d'un début d'une phase de remplissage étant déterminé en fonction de la masse totale déterminée (M), une masse de produit en vrac (2) amenée au cours d'une phase de remplissage étant déterminée comme différence de la masse totale (M) avant le moment (t-f) où la phase de remplissage débute et une masse totale (M) à la fin de la phase de remplissage.

13. Procédé suivant une des revendications précédentes, **caractérisé en ce que** le produit en vrac (2) est conçu comme une matière pouvant être fluidisée par secouage, ledit matériau en vrac (2) étant sélectionné parmi un ou plusieurs des types de matières suivants, à savoir, (A) matériaux artificiels, gravier, pierre, sable, caoutchouc, produits alimentaires tels que farines, céréales et/ou parmi une des matières fluidisables, à savoir granulés, semoules, poudres, regranulés, particules broyés, grains ou flocons.

14. Dispositif de convoyage oscillant (1) destiné au convoyage oscillant de produits en vrac (2), ledit dispositif de convoyage oscillant présentant une trémie de chargement (4) pour recevoir du produit en vrac (2) avec une sortie de trémie inférieure (12), une goulotte de convoyage (3) qui est disposée au-dessous de la trémie de chargement (4) et un dispositif de distribution (14) pour distribuer le produit en vrac (2), la sortie de trémie (12) étant disposée à une hauteur de couche (h) au-dessus de la goulotte de convoyage (3),
une suspension élastique (16), une base d'actionneur oscillant (15) et un actionneur oscillant (6) pour actionner la goulotte de convoyage (3) avec une fréquence d'oscillation (f) et une ampleur d'oscillation (B), un dispositif de réglage en hauteur (18, 24) pour régler la hauteur de couche (h), une balance (7) destinée à mesurer une masse totale (M), un dispositif de commande (20) conçu pour enregistrer un débit de matière à atteindre (MD-soll) et des paramètres spécifiques à la matière (A, D) et émettre des signaux de commande (S2) vers l'actionneur oscillant (6) pour régler une ampleur d'oscillation (W) et une fréquence d'oscillation (f), émettre des signaux de commande (S3) vers le dispositif de réglage en hauteur (24) pour régler la hauteur de couche (h), enregistrer une valeur de mesure de masse de la balance (7) et déterminer un débit de matière (MD) à partir des valeurs de mesure de masse en fonction du temps, évaluation d'un débit de matière (MD) par comparaison avec un débit de matière à atteindre (MD_soll) suivie d'une émission de signaux de commande S2, S3) vers l'actionneur oscillant (6) et/ou le dispositif de réglage en hauteur (18, 24) en fonction de l'évaluation,
**caractérisé en ce que**
la balance (7) mesure une masse totale (M) d'un agencement composé au moins du dispositif de réglage en hauteur (18, 24), de la trémie de chargement (4), de l'actionneur oscillant (6), de la goulotte de convoyage (3), de la suspension élastique (16) et de la base de l'actionneur oscillant (15), y compris le produit en vrac (2) reçu dans la trémie de chargement (4) et la goulotte de convoyage (2).

15. Dispositif de convoyage oscillant (1) suivant la revendication 14, **caractérisé en ce que** le dispositif de réglage en hauteur (18, 24) est prévu pour le réglage d'une hauteur verticale de la trémie de chargement (4) par rapport à la goulotte de convoyage (3) et/ou au réglage d'une hauteur verticale de la goulotte de convoyage (3) par rapport à la trémie de chargement (4).

16. Dispositif de convoyage oscillant (1) suivant la revendication 14 ou 15, **caractérisé en ce que** ledit dispositif présente une suspension élastique (16) de la goulotte de convoyage (3) sur une base de l'actionneur oscillant (15), qui permet une oscillation dans une direction combinée de la direction de convoyage (x) et de la direction verticale (z).
